# EUROPÄISCHE PATENTSCHRIFT

(11) **EP 2 157 837 B1**
(45) Veröffentlichungstag und Bekanntmachung des Hinweises auf die Patenterteilung: **31.10.2012**
(21) Anmeldenummer: 09173517.5
(22) Anmeldetag: 06.09.2006
(51) Int. Cl.: H05H 1/34, B23K 10/00

(54) **Steuervorrichtung und ein Steuerverfahren für ein Wasserdampf-Schneidgerät**
Control device and method for a steam cutting apparatus
Méthode et dispositif de contrôle pour un outil coupe à la vapeur d'eau

(30) Priorität: 09.09.2005 AT 14792005
(43) Veröffentlichungstag der Anmeldung: 24.02.2010
(62) Teilanmeldung aus: 06774765.9
(73) Patentinhaber: Fronius International GmbH, 4643 Pettenbach (AT)
(72) Erfinder: Aunitzky, Ernst, 4643 Pettenbach (AT); Haberler, Wolfgang, 4655 Vorchdorf (AT); Ortner, Roland, 4643 Pettenbach (AT); Pauser, Heribert, 3484 Grafenwörth (AT); Stöger, Max, 4655 Vorchdorf (AT); Trausner, Martin, 4642 Sattledt (AT); Wiesinger, Andreas, 4600 Wels (AT)
(74) Vertreter: Sonn & Partner Patentanwälte

(56) Entgegenhaltungen:
- WO-A1-99/38365
- WO-A2-2005/110659

## Beschreibung

Die Erfindung betrifft ein Wasserdampf-Schneidgerät mit einer Steuervorrichtung mit einem Speicherelement für Prozessparameter und Prozessabläufe, welche mit einer Stromquelle und einer Fördervorrichtung für Flüssigkeit, insbesondere einer Pumpe oder einem Sperrelement und/oder einem Sperrglied des Wasserdampf-Schneidgeräts verbunden ist, wobei das Wasserdampf-Schneidgerät einen mit Flüssigkeit befüllbaren Tank und einen mit diesem über eine Versorgungsleitung und mit der Stromquelle verbundenen Schneidbrenner aufweist.

Weiters betrifft die Erfindung ein Verfahren zum Steuern eines Wasserdampf-Schneidgeräts, bei dem eine Steuerung eines Betriebszustands des Wasserdampf-Schneidgeräts mittels einer Steuervorrichtung erfolgt, wobei hierzu Signale an eine Stromquelle und eine Fördereinrichtung für Flüssigkeit übertragen werden, so dass eine Flüssigkeit von einem befüllbaren Tank über eine Versorgungsleitung zu einem Schneidbrenner gefördert werden kann und dem Schneidbrenner bedarfsweise elektrische Energie von der Stromquelle zugeführt werden kann.

Aus der EP 1 050 200 B1 ist ein Wasserdampf-Schneidgerät bekannt, das zumindest einen Behälter für eine Flüssigkeit, eine Stromquelle, eine Steuervorrichtung, und einen über eine Versorgungsleitung mit dem Behälter bzw. Tank verbundenen Schneidbrenner zur Erzeugung eines über eine Düse austretenden Wasserdampfplasmastrahls aufweist. Der Behälter kann durch eine austauschbare Gasflasche oder Gaskartusche, in welcher ein vordefinierter Druck aufgebaut ist, gebildet oder mit dieser verbunden sein. Ein derartiger Druckbehälter ermöglicht das Fördern der Flüssigkeit vom Behälter zum Schneidbrenner ohne Notwendigkeit einer Pumpe. Dies erfolgt in einer beschriebenen Ausführungsvariante beispielsweise dadurch, dass das Gas der Gasflasche in den Behälter mit Flüssigkeit strömt und einen Druckpolster aufbaut, der die Flüssigkeit aus einer Austrittsöffnung des Behälters drückt.

In der EP 1 050 200 B1 ist jedoch nicht offenbart, wie die Befüllung eines Tanks des Schneidgeräts mit Flüssigkeit aus einer Kartusche erfolgt. In einer Ausführungsvariante ist lediglich gezeigt, dass dies über einen offenen Behälter und einen Einfüllstutzen erfolgen kann, was sich als wenig komfortabel erweist, da einerseits eine ortsfeste Infrastruktur, beispielsweise ein Wasserleitungsanschluss, benötigt wird, um den in befülltem Zustand nicht transportfähigen Behälter zu befüllen. Weiters ist das Befüllen des Tanks zeitaufwändig, da die Flüssigkeit ohne zusätzliche Druckaufbringung verhältnismäßig langsam in den Tank strömt. Es stellt sich die Forderung an ein derartiges Wasserdampf-Schneidgerät, das die Befüllung mit Flüssigkeit möglichst unabhängig von einer Infrastruktur möglich ist. Weiters sollen die verwendeten Ressourcen, insbesondere Wasser, möglichst effizient verwendet werden, d.h. es soll die Flüssigkeit bei der Befüllung rückstandsfrei, ohne Verschüttungsgefahr und möglichst rasch in den Behälter überführt werden.

Im Stand der Technik besteht bei obgenannten Systemen weiters der Nachteil, dass die Flüssigkeit im Behälter nicht aufgebraucht werden kann, um den Behälter anschließend wieder zu befüllen. Dies kann zu einer Fehlfunktion des Schneidprozesses bzw. zur Beschädigung des Brenners führen, da durch Entleeren des Tanks gegebenenfalls Luft in die Leitungen bzw. den Tank gesaugt werden würde, wodurch eine ordnungsgemäße Einsatzbereitschaft des Systems nicht mehr garantiert sein würde. Die Flüssigkeitsressourcen können in nachteiliger Weise somit nicht optimal verwertet werden. Es sollte jedoch sichergestellt werden, dass nach einem Befüllen des Tanks ein ordnungsgemäßer Schneidprozess durchführbar ist, ohne dass Luftblasen in der Zuleitung zum Schneidbrenner auftreten, die eine Erzeugung von Wasserdampf verhindern und den Schneidprozess beeinträchtigen.

Die Aufgabe der vorliegenden Erfindung liegt darin, die genannten Nachteile aus dem Stand der Technik zu beheben, die Mobilität und Effizienz eines Wasserdampf-Schneidgeräts zu verbessern und hierfür entsprechende Vorrichtungen und Verfahren zur Verfügung zu stellen. Insbesondere sollen die für den Schneidprozess des Wasserdampf-Schneidgeräts benötigten Flüssigkeitsressourcen besser verwertet werden.

Die Aufgabe wird durch ein oben genanntes wasserdampf-Schnadgerät gelöst, in deren Speicherelement Definitionen zur Durchführung eines Befüllmodus hinterlegt sind, und ein Aktivierungselement mit der Steuervorrichtung gekoppelt ist, wobei das Aktivierungselement ausgebildet ist, um bei dessen Betätigung oder bei Erkennung eines Befüllungsereignisses einen derartigen Befüllmodus einzuleiten, mit dem die Einsatzbereitschaft des Wasserdampf-Schneidgeräts geprüft und wiederhergestellt werden kann, wobei zur Wiederherstellung der Einsatzbereitschaft die Fördervorrichtung angesteuerbar ist, sodass Flüssigkeit über die Versorgungsleitung in den Schneidbrenner gefördert wird, wobei ein Sperrglied in der Versorgungsleitung zur Unterbrechung der Flüssigkeitszufuhr zum Schneidbrenner aktivierbar ist, um die Durchführung eines Schneidprozesses bis zum Vollzug des Befüllmodus zu sperren.

Dadurch, dass das Aktivierungselement durch ein Bedienelement, insbesondere eine Taste, gebildet ist, wird für einen Benutzer eine zusätzliche Einstellmöglichkeit am Wasserdampf-Schneidgerät geschaffen, welche zur Verbesserung des Schneidprozesses beiträgt.

Eine einfache Bedienung für ein Personal ergibt sich dabei, wenn eine Ein- und/oder Ausgabevorrichtung des Wasserdampf-Schneidgeräts das Bedienelement aufweist.

Eine zweckmäßige Möglichkeit der Bedienung besteht jedoch auch darin, wenn das Bedienelement am Schneidbrenner angeordnet ist.

Ebenso kann das Aktivierungselement durch ein Erfassungsmittel, insbesondere einen Sensor, gebildet sein, das zur Überwachung des Tanks ausgebildet ist. Von der Steuervorrichtung kann somit erkannt werden, ob eine Befüllung des Tanks durchgeführt wurde, wodurch ein automatisiertes bzw. an dieses Ereignis gebundenes Aufrufen des Befüllmodus möglich ist.

Hierzu kann das Erfassungsmittel mit einer Kupplungsvorrichtung zur Überwachung derselben gekoppelt sein, wobei das Erfassungsmittel erkennt, ob eine Ankoppelung einer Kartusche an den Tank erfolgt.

Ebenso wird die Erfindung durch ein Verfahren gelöst, bei dem in Abhängigkeit eines Aktivierungselements ein Befüllmodus, von der Steuervorrichtung aufgerufen wird, bei dem die Einsatzbereitschaft, insbesondere die Flüssigkeitsverteilung in der Leitung und dem Schneidbrenner, des Wasserdampf-Schneidgeräts geprüft und wiederhergestellt wird, wobei zur Wiederherstellung der Einsatzbereitschaft die Fördervorrichtung angesteuert wird, sodass Flüssigkeit über die Versorgungsleitung in den Schneidbrenner gefördert wird, wobei ein Sperrglied in der Versorgungsleitung zur Unterbrechung der Flüssigkeitszufuhr zum Schneidbrenner aktiviert wird, um die Durchführung eines Schneidprozesses zu sperren, bis der Befüllmodus vollzogen wurde. Durch diese Ausgestaltungen bzw. Vorgehensweisen wird in vorteilhafter Weise eine verbesserte Ausnutzung der Flüssigkeit im Tank ermöglicht. Durch den Befüllmodus wird sichergestellt, dass auch nach völliger bzw. weitgehender Entleerung des Tanks die Einsatzbereitschaft des Wasserdampf-Schneidgeräts wiederhergestellt wird. Hierzu wird die Flüssigkeitsverteilung im Schneidbrenner und der Leitung wieder auf ein normales Niveau gebracht, wobei Lufteinschlüsse oder dgl. abgebaut werden. Nach der Durchführung des Befüllmodus kann somit ein ordnungsgemäßer Schneidprozess durchgeführt werden.

Eine Vorgehensweise ist vorteilhaft, bei der das Aktivierungselement nach einer erfolgten Erst- oder Wiederbefüllung des Tanks über eine Kupplungsvorrichtung betätigt bzw. aktiviert wird, bevor über den Schneidbrenner ein Schneidprozess durchgeführt wird. Somit wird eine Sicherheitsmaßnahme geschaffen, die gegebenenfalls durchgeführt werden muss, bevor der nächste Schneidprozess gestartet wird, wodurch die Prozesssicherheit insgesamt erhöht werden kann.

Als zweckmäßig hat es sich erwiesen, wenn zur Durchführung des Befüllmodus aus einem Speicherelement diesbezügliche Parameter aufgerufen werden, nach denen die Fördereinrichtung für Flüssigkeit, insbesondere eine Pumpe, ein Sperrelement der Versorgungseinrichtung und/oder ein Sperrelement im Bereich des Schneidbrenners, gesteuert werden, da die Verwendung von aus dem Stand der Technik bekannten, elektronischen Steuervorrichtungen, insbesondere einer Mikroprozessorsteuerung, eine flexible und adaptierbare Ansteuerung unterschiedlichster Komponenten in Abhängigkeit von im Speicherelement hinerlegten Programmroutinen ermöglicht.

Eine Vorgehensweise, bei der beim Befüllmodus von einem Strömungs- oder Druckwächter kontrolliert wird, ob der Schneidbrenner bzw. die Leitung mit Flüssigkeit, gegebenenfalls unter Anliegen eines Mindestdrucks in der Leitung, versorgt wird, ist vorteilhaft, da somit festgestellt werden kann, ob die Einsatzbereitschaft des Wasserdampf-Schneidgeräts wiederhergestellt ist.

Dadurch, dass beim Befüllmodus eine Entlüftung der Leitung bzw. dem Schneidbrenner, insbesondere über eine Entlüftungsvorrichtung, erfolgt, können Lufteinschlüsse, welche zu Fehlfunktionen bei einem Schneidprozess führen können, abgebaut werden.

Die vorliegende Erfindung wird anhand der beigefügten, schematischen Zeichnungen näher erläutert.

Darin zeigen:
Fig. 1 eine Ausführungsvariante eines Wasserdampf-Schneidgeräts in Seitenansicht;
Fig. 2 eine Schnittdarstellung einer in einer Sperrstellung befindlichen Kupplungsvorrichtung eines Tanks des Wasserdampf-Schneidgeräts nach Fig. 1;
Fig. 3 die Kupplungsvorrichtung nach Fig. 2 in Freigabestellung und einer verschlossenen Flüssigkeits-Kartusche;
Fig. 4 die Kupplungsvorrichtung nach Fig. 3 mit einer geöffneten Flüssigkeits-Kartusche zur Befüllung des Tanks des Wasserdampf-Schneidgeräts;
Fig. 5 eine weitere Ausführungsvariante der Kupplungsvorrichtung mit einer Flüssigkeits-Kartusche in einer Detailansicht;
Fig. 6 eine Kupplungsvorrichtung nach Fig. 2 bis 5 in Draufsicht;
Fig. 7 eine weitere Ausführungsvariante des Wasserdampf-Schneidgeräts in einem Funktionsschema.

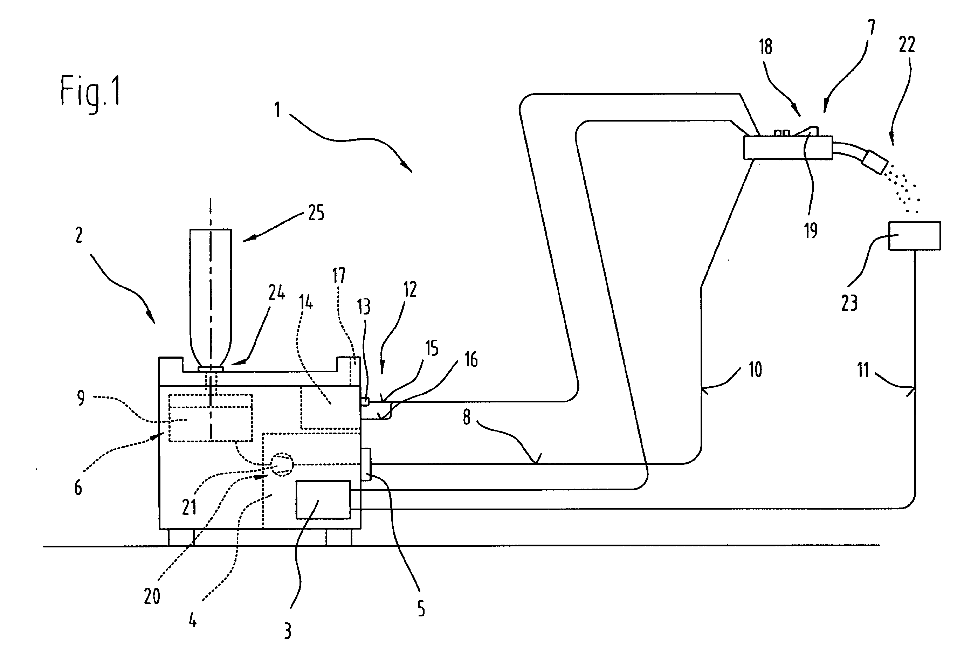

In Fig. 1 ist ein Wasserdampf-Schneidgerät 1 für ein Wasserdampf-Schneidverfahren mit einem Versorgungsgerät 2 gezeigt. Das Versorgungsgerät 2 umfasst eine Stromquelle 3, eine Steuervorrichtung 4, ein der Steuervorrichtung 4 zugeordnetes Sperrelement 5 und einen Tank 6. Das Sperrelement 5 ist mit dem Tank 6 und einem durch einen Schneidbrenner 7 gebildeten Werkzeug über eine Versorgungsleitung 8 verbunden, so dass der Schneidbrenner 7 mit einer im Tank 6 angeordneten Flüssigkeit 9, insbesondere Wasser, versorgt werden kann. Die Versorgung des Schneidbrenners 7 mit Energie, insbesondere mit Strom und Spannung, erfolgt über Leitungen 10, 11 vom Versorgungsgerät 2.

Zum Kühlen des Schneidbrenners 7 ist dieser gegebenenfalls über einen Kühlkreislauf 12 allenfalls unter Zwischenschaltung eines Strömungswächters 13 mit einem Flüssigkeitsbehälter 14 verbunden. Bei der Inbetriebnahme des Schneidbrenners 7 bzw. des Versorgungsgeräts 2 kann der Kühlkreislauf 12 von der Steuervorrichtung 4 gestartet werden, wodurch eine Kühlung des Schneidbrenners 7 über den Kühlkreislauf 12 erreicht wird. Zur Bildung des Kühlkreislaufs 12 wird der Schneidbrenner 7 über Kühlleitungen 15, 16 mit dem Flüssigkeitsbehälter 14 verbunden. Eine Kühlung des Scheidbrenners 7 kann jedoch auch durch die im Tank 6 befindliche Flüssigkeit 9, aus der in späterer Folge ein Wasserdampf erzeugt wird, erfolgen, die über die Versorgungsleitung 8 zum Schneidbrenner 7 transportiert wird. In diesem Fall kann ein eigener Kühlkreislauf 12 gegebenenfalls entfallen.

Weiters weist das Versorgungsgerät 2 eine Ein- und/oder Ausgabevorrichtung 17 auf, über welche die unterschiedlichsten Parameter bzw. Betriebsarten des Wasserdampf-Schneidgerätes 1 eingestellt und/oder visualisiert werden können. Dabei werden die über die Ein- und/oder Ausgabevorrichtung 17 eingestellten Parameter an die Steuervorrichtung 4 weitergeleitet, worauf von der Steuervorrichtung 4 die einzelnen Komponenten des Wasserdampf-Schneidgerätes 1 angesteuert werden können.

Selbstverständlich muss der Schneidbrenner 7 nicht, wie im dargestellten Ausführungsbeispiel gezeigt, über einzelne Leitungen 8, 10, 11, 15, 16 mit dem Versorgungsgerät 2 verbunden sein, sondern es können die einzelnen Leitungen 8, 10, 11, 15, 16 zumindest teilweise auch in einem gemeinsamen Schlauchpaket (nicht dargestellt) zusammengefasst werden, welches mit dem Schneidbrenner 7 und dem Versorgungsgerät 2 über ein Kupplungselement, insbesondere über Anschlussstecker, angeschlossen wird.

Weiters kann der Schneidbrenner 7 zumindest ein erstes Bedienungselement 18, insbesondere einen Taster 19, aufweisen. Über das erste Bedienungselement 18, insbesondere den Taster 19, kann der Benutzer durch Aktivieren und/oder Deaktivieren desselben der Steuervorrichtung 4 vom Schneidbrenner 7 aus mitteilen, dass ein Wasserdampf-Schneidverfahren gestartet bzw. durchgeführt werden soll. Des Weiteren können an der Ein- und/oder Ausgabevorrichtung 17 beispielsweise Voreinstellungen getroffen werden, insbesondere das zu schneidende Material, die verwendete Flüssigkeit und beispielsweise Kennlinien des Stromes und der Spannung vordefiniert werden. Selbstverständlich können weitere Bedienelemente am Schneidbrenner 7 angeordnet sein, über die ein oder mehrere Betriebsparameter des Wasserdampf-Schneidgerätes 1 vom Schneidbrenner 7 aus eingestellt werden. Hierzu können diese Bedienelemente direkt über Leitungen oder über ein Bussystem mit dem Versorgungsgerät 2, insbesondere der Steuervorrichtung 4, verbunden sein.

Die Steuervorrichtung 4 aktiviert nach dem Betätigen des ersten Bedienungselements 18 die einzelnen für das Wasserdampf-Schneidverfahren benötigten Komponenten. Beispielsweise werden zuerst eine Fördervorrichtung 20 für die Flüssigkeit 9, insbesondere eine Pumpe 21, das Sperrelement 5 sowie die Stromquelle 3 angesteuert, wodurch eine Versorgung des Schneidbrenners 7 mit der Flüssigkeit 9 sowie mit elektrischer Energie eingeleitet wird. Anschließend aktiviert die Steuervorrichtung 4 gegebenenfalls den Kühlkreislauf 12, so dass eine Kühlung des Schneidbrenners 7 ermöglicht wird. Durch die Versorgung des Schneidbrenners 7 mit der Flüssigkeit 9 und mit Energie, insbesondere mit Strom und Spannung, wird nunmehr im Schneidbrenner 7 die Flüssigkeit 9 in ein Gas 22 bzw. Dampf mit hoher Temperatur umgewandelt und eine Plasmasäule aufgebaut, so dass durch das aus dem Schneidbrenner 7 ausströmende Gas 22 ein Schneidprozess an einem Werkstück 23 durchgeführt werden kann. Der genaue Ablauf zur Umwandlung der Flüssigkeit 9 in das Gas 22 kann der AT 406 559 B der Anmelderin entnommen werden.

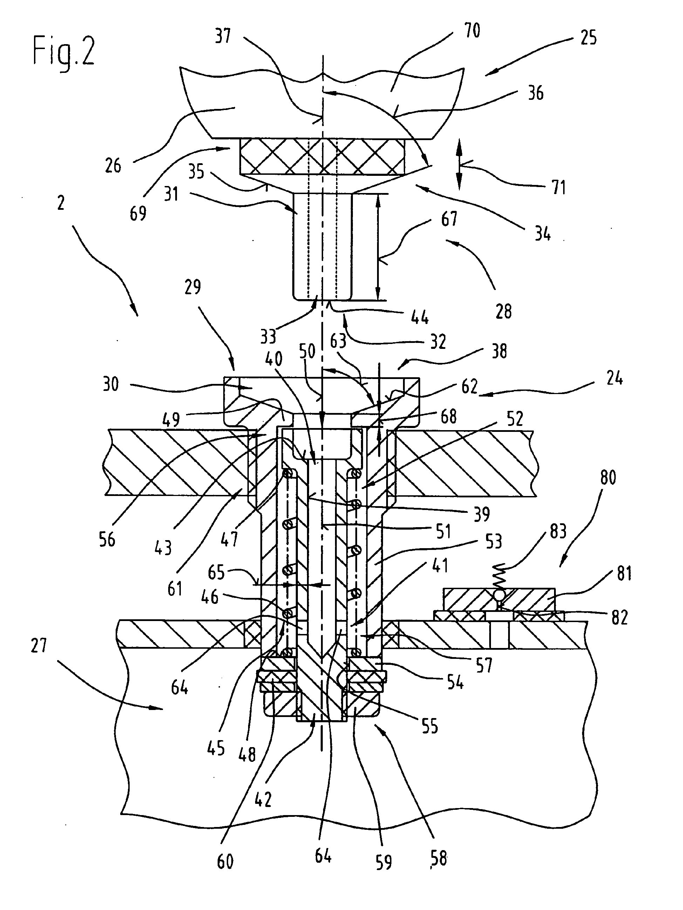

In der Fig. 2 ist eine Detailansicht des Wasserdampf-Schneidgeräts 1 im Bereich des Tanks 6 gezeigt. Am Tank 6 ist eine Kupplungsvorrichtung 24 angeordnet, auf die eine Kartusche 25 bzw. Druckgaspackung aufgesetzt werden kann. Die Kupplungsvorrichtung 24 dient der Herstellung einer Verbindung zwischen einem Innenraum 26 der Kartusche 25 und einem Innenraum 27 des Tanks 6, so dass ein Medium aus dem Innenraum 26 der Kartusche 25 in den Tank 6 fließen bzw. strömen kann.

Die Kartusche 25 enthält zumindest die Flüssigkeit 9, insbesondere Wasser, wobei im Innenraum 26 der Kartusche 25 bevorzugt ein Überdruck herrscht, so dass die Flüssigkeit 9 beim Öffnen eines Spenders 28 mit einer hohen Geschwindigkeit austritt. Derartige Kartuschen 25 sind aus dem Stand der Technik bekannt, weshalb auf deren Aufbau und Funktionsweise zur Herstellung eines Überdrucks an dieser Stelle nicht näher eingegangen wird. In vorteilhafter Weise können durch den Aufbau der Kupplungsvorrichtung 24 auch Kartuschen 25 bzw. Behälter verwendet werden, in denen kein Überdruck, d.h. atmosphärischer Druck, herrscht.

Die Kupplungsvorrichtung 24 weist ein Gehäuse 29 auf, in dem ein Aufnahmebereich 30 ausgebildet ist. Der Aufnahmebereich 30 ist so ausgebildet, dass die Kartusche 25 mit ihrem Spender 28 auf dem Gehäuse 29 aufgesetzt werden kann. In der gezeigten Ausführungsvariante ist der Spender 28 der Kartusche 25 durch einen zylindrischen Zapfen 31 gebildet, der an einem Stirnendbereich 32 eine Austrittsöffnung 33 aufweist. Der dem Stirnendbereich 32 gegenüberliegende Endbereich 34 des Zapfens 31 weist eine Anschlagfläche 35 auf, die insbesondere in einem Winkel 36 zu einer Längsmittelachse 37 der Kartusche 25 abgeschrägt ist.

Die Kupplungsvorrichtung 24 weist weiters einen Dosiermechanismus 38 auf, über den das Befüllen des Tanks 6 mittels der Kartusche 25 gesteuert werden kann. Hierzu ist dem Dosiermechanismus 38 ein Kanal 39 zugeordnet, der zumindest eine Eintrittsöffnung 40 und eine Austrittsöffnung 41 aufweist. Die Eintrittsöffnung 40 kann dabei mit der Austrittsöffnung 33 der Kartusche 25 in Strömungsverbindung gebracht werden und die Austrittsöffnung 41 des Dosiermechanismus 28 kann nach außen hin freigegeben werden, insbesondere mit dem Innenraum 27 des Tanks 6 in Strömungsverbindung gebracht werden.

Der Dosiermechanismus 38 ist derart ausgebildet, dass durch diesen die Kupplungsvorrichtung 24 zumindest eine Sperrstellung und eine Freigabestellung einnehmen kann. In der durch den Dosiermechanismus 38 definierten Sperrstellung ist die Austrittsöffnung 41 des Kanals 39 verschlossen, so dass keine Flüssigkeit durch den Kanal 39 abfließen kann. In der Freigabestellung ist die Austrittsöffnung 41 des Kanals 39 freigegeben von außen zugänglich, so dass eine im Kanal 39 befindliche Flüssigkeit durch die Austrittsöffnung 41 abfließen kann.

Die Kupplungsvorrichtung 24 ist im Normalzustand, in dem keine äußeren Kräfte den Dosiermechanismus 38 beaufschlagen, in der Sperrstellung. Mittels des Dosiermechanismus 38 ist die Kupplungsvorrichtung 24 aus der Sperrstellung in die Freigabestellung überführbar. Dies erfolgt bevorzugt durch Aufsetzen der Kartusche 25 auf den Aufnahmebereich 30 der Kupplungsvorrichtung, wobei durch das Aufsetzen eine Verschiebung der Austrittsöffnung 41 bzw. des Kanals 39 erfolgt.

Um dies zu ermöglichen ist der Kanal 39 im gezeigten Ausführungsbeispiel in einem Hohlbolzen 42 angeordnet, der im Gehäuse 29 längsverschiebbar gelagert ist. Im Aufnahmebereich 30 ist am Hohlbolzen 42 eine stirnseitige Anschlagfläche 43 angeordnet, die beim Aufsetzen der Kartusche 25 auf die Kupplungsvorrichtung 24 mit einer Stirnfläche 44 des Zapfens 31 der Kartusche 25 in Kontakt tritt.

Der Dosiermechanismus 38 weist weiters ein federelastisches Element 45, insbesondere eine Feder 46, ein Elastikkissen oder dergleichen, auf, das den Hohlbolzen bzw. die Austrittsöffnung im unbelasteten Fall in der Sperrstellung hält. Die Feder 46 ist beispielsweise im Inneren des Gehäuses 29 angeordnet und es stützt sich diese auf eine Stützfläche 47 des Hohlbolzens 42 und auf eine Stützfläche 48 des Gehäuses 29, wie in Fig. 2 gezeigt. Die Feder 46 ist hierbei eine Druckfeder, die den Hohlbolzen 42 gegebenenfalls gegen einen Vorsprung 49 des Gehäuses 29 drückt, wodurch die Sperrstellung der Kupplungsvorrichtung 24 definiert sein kann.

Durch Beaufschlagung des Hohlbolzens 42 mit einer Kraft in Richtung eines Pfeils 50, die entgegen einer Federkraft des Elements 45 wirkt, kann dieser in Richtung seiner Längsmittelachse 51 verschoben werden. Das Gehäuse 29 weist hierzu einen inneren Hohlraum 52 auf, der durch eine Seitenwand 53 und eine Stirnwand 54 umschlossen ist. Die Stirnwand weist eine Ausnehmung 55 auf, durch die der Hohlbolzen 42 in der Freigabestellung herausragt.

Ein Endbereich 56 des Hohlbolzens 42 im Aufnahmebereich 30 für die Kartusche 25 ist beispielsweise durch eine gezeigte Aufweitung 56 bzw. Auskragung gebildet, die innen die Anschlagfläche 43 für den Zapfen 31 der Kartusche 25 ausbildet und die außen die Stützfläche 47 für die Feder 46 ausbildet. Im weiteren Endbereich 57 des Hohlbolzens 42 ist bevorzugt ein Befestigungs- bzw. Anschlagelement 58, beispielsweise eine Schraubmutter 59, und ein Dichtungselement 60, insbesondere ein Dichtungsring, angeordnet. Das Anschlagelement 58 und das Dichtungselement 60 liegen in der Sperrstellung der Kupplungsvorrichtung 24 unter Vorspannung durch die Feder 46 an der Stirnwand 54 des Gehäuses 29 an, so dass der Hohlraum 52 des Gehäuses 29 in der Sperrstellung nach außen hin abgedichtet ist. Im gezeigten Ausführungsbeispiel ist durch das an der Stirnwand 54 anliegende Anschlagelement 58 bzw. das Dichtungselement 60 die Sperrstellung der Kupplungsvorrichtung 24 definiert.

Die Kupplungsvorrichtung 24 ist über eine Befestigungsvorrichtung 61, insbesondere ein Gewinde, am Versorgungsgerät 2, insbesondere dem Tank 6, in seiner Lage fixiert, wobei die Längsmittelachse 51 der Kupplungsvorrichtung 24 bevorzugt im Wesentlichen vertikal auf eine horizontale Aufstandsfläche des Versorgungsgeräts 2 steht. Ein nicht näher bezeichnetes, in Fig. 2 dargestelltes Dichtungselement zwischen dem Tank 6 und dem Gehäuse 29 kann eine Abdichtung des Innenraums 27 des Tanks 6 vornehmen.

Das Gehäuse 29 weist im Aufnahmebereich 30 für die Kartusche 25 eine Anschlagfläche 62 auf, die eine Endposition der Kartusche 25 beim Aufsetzen auf die Kupplungsvorrichtung 24 definiert. Hierzu tritt die Anschlagfläche 35 des Spenders 28 mit der Anschlagfläche 62 des Aufnahmebereichs 30 in Kontakt. Die Anschlagfläche 62 ist vorzugsweise in einem Winkel 63 zur Längsmittelachse 51 abgeschrägt, der dem Winkel 36 entspricht, in dem die Anschlagfläche 35 des Spenders 28 verläuft.

Es ist die Austrittsöffnung 41 des Dosiermechanismus 38 nun bevorzugt im der Eintrittsöffnung 40 gegenüberliegenden Endbereich 57 des Hohlbolzens 42 angeordnet. Insbesondere ist im Hohlbolzen 42 zumindest eine, in Fig. 2 zwei, durchgängige Bohrung(en) 64 angeordnet, die quer zur Längsmittelachse 51 eine Wandstärke 65 des Hohlbolzens 42 durchsetzt bzw. durchsetzen.

Durch eine derartige Ausgestaltung sind die Bohrungen 64 in der Sperrstellung der Kupplungsvorrichtung 24 im Hohlraum 52 des Gehäuses 29 angeordnet und von außen nicht zugänglich bzw. verschlossen. Durch die Seitenwand 53, die Stirnwand 54 und das Dichtungselement 60 ist der Kanal 39 in Sperrstellung der Kupplungsvorrichtung 24 gegenüber dem Innenraum 27 des Tanks 6 abgedichtet.

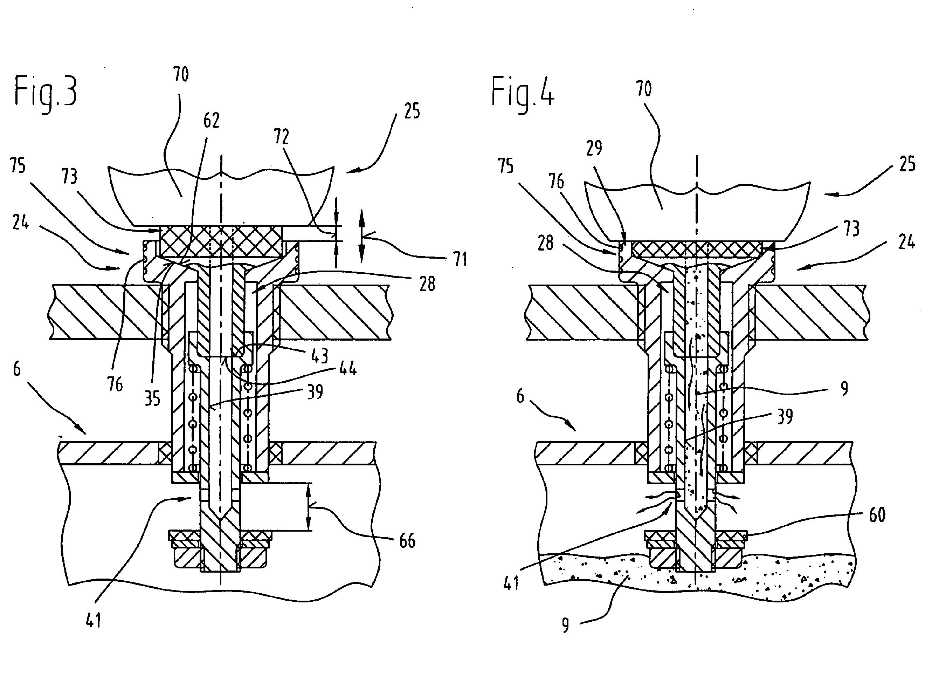

Das Überführen der Kupplungsvorrichtung 24 von der Sperrstellung in die Freigabestellung erfolgt nun derart, dass die Anschlagfläche 43 des Hohlbolzens 42 mit einer Kraft in Richtung des Pfeils 50 belastet wird, die größer als eine entgegen gerichtete Federkraft des Elements 45 ist. Ist dies der Fall, wird der Hohlbolzen 42 in Richtung des Pfeils 50 bewegt, bis ein Verstellweg 66 erreicht wird, wie aus Fig. 3 ersichtlich ist. Die Begrenzung des Verschiebewegs des Hohlbolzens 42 auf den Verstellweg 66 wird über einen Anschlag am Gehäuse 29 erreicht, die Bewegung eines betätigenden Elements beschränkt. Im Ausführungsbeispiel ist der Anschlag durch die Anschlagfläche 62 im Aufnahmebereich 30 des Gehäuses 29 gebildet, der den Spender 28 der Kartusche 25 beim Aufsetzen auf die Kupplungsvorrichtung 24 in Richtung der Längsmittelachse 51 positioniert. Während in der endgültigen Freigabestellung der Kupplungsvorrichtung 24 die Anschlagfläche 35 des Spenders 28 an der Anschlagfläche 62 des Gehäuses 29 aufliegt, tritt zuvor die Stirnfläche 44 des Zapfens 31 mit der Anschlagfläche 43 des Hohlbolzens 42 in Kontakt, wobei es bei Bewegung des Zapfens 31 in Richtung des Pfeils 50 solange zu einer Verstellung des Hohlbolzens 42 relativ zum Gehäuse 29 kommt, bis der Spender 28 an der Anschlagfläche 62 zur Auflage kommt und der Verstellweg 66 erreicht ist.

Durch die konstruktive Ausgestaltung des Spenders 28 ist auch der Verstellweg 66 bestimmt. Im gezeigten Ausführungsbeispiel ist der Verstellweg im Wesentlichen eine Zapfenlänge 67 abzüglich einer Breite 68 des Vorsprungs 49.

In der Fig. 3 ist die Kupplungsvorrichtung 24 in der Freigabestellung gezeigt. Wie ersichtlich ist die Austrittsöffnung 41 des Kanals 39 nun außerhalb des Gehäuses 29 angeordnet und es ist eine Strömungsverbindung zwischen dem Innenraum 27 des Tanks 6 und dem Kanal 39 der Kupplungsvorrichtung 24 hergestellt.

Ist die Kartusche 25 - wie in Fig. 4 dargestellt - nun geöffnet, kann deren im Innenraum 26 vorhandene Flüssigkeit 9 in die Eintrittsöffnung 40 des Kanals 39 und über den Kanal 39 in den Tank 6 strömen. Es sei hierzu angemerkt, dass je nach verwendetem Typ der Kartusche 25 ein zusätzlicher Schritt zum Öffnen derselben notwendig sein kann.

Im gezeigten Ausführungsbeispiel wird eine Kartusche 25 mit einem Verschließmechanismus 69 verwendet, der in der Freigabestellung der Kupplungsvorrichtung 24 deaktiviert werden muss, wobei dies in Fig. 3 und 4 veranschaulicht ist. Die Deaktivierung des Verschließmechanismus 69 erfolgt, indem der Spender 28 relativ zum restlichen Behälter 70 der Kartusche 25 in Richtung eines Doppelpfeils 71 bewegt wird, wodurch der Verschließmechanismus 69 den Innenraum 26 des Behälters 70 freigibt und der Austrittsöffnung 33 des Spenders 28 Flüssigkeit 9 austritt. Die Relativbewegung zwischen dem Spender 28 und dem Behälter 70 der Kartusche 25 erfolgt in einfacher Weise durch Ausübung einer Kraft auf den Behälter 70, wobei der Spender 28 im Aufnahmebereich 30 der Kupplungsvorrichtung 24 angeordnet ist. In den Fig. 3 und 4 ist dieser Vorgang durch einen Abstand 72 symbolisiert, um den der Behälter 70 in Richtung des Spenders 28 bewegt wird, bis die Endstellung (Fig. 4) erreicht ist. Der Spender 28, umfassend den Zapfen 31 und den Anschlag mit der Anschlagfläche 35, ist bevorzugt aus Kunststoff ausgebildet und beispielsweise über ein Elastikkissen 73 relativ zum Behälter 70 verstellbar angeordnet. In Fig. 4 ist schließlich jene Befüllstellung gezeigt, die die Kupplungsvorrichtung 24 gemeinsam mit der Kartusche 25 zum Befüllen des Tanks 6 mit Flüssigkeit 9 einnimmt, wobei das Elastikkissen 73 entsprechend zusammengepresst ist.

Hierzu ist noch vorgesehen, dass sich das Elastikkissen 73 nach Anschlag der Anschlagfläche 35 an der Auflagefläche 62 durch Ausüben von Druck seitlich ausdehnt und sich an den Aufnahmebereich 30, insbesondere an die Seitenflächen und/oder der Stirnfläche und/oder der Anschlagfläche 35 der Kupplungsvorrichtung 24, anpasst, wie dies in Fig. 4 ersichtlich ist. Damit wird nun in vorteilhafter Weise erreicht, dass eine abdichtende Funktion geschaffen wird und somit die von der Kartusche 25 austretende Flüssigkeit 9 nicht nach hinten ausströmen kann, d.h., dass die unter Druck stehende Flüssigkeit 9 durch das Abdichten im hinteren Bereich der Kupplungsvorrichtung 24 nur mehr über die Bohrung 64 austreten kann.

Es sei an dieser Stelle angemerkt, dass selbstverständlich Kartuschen 25 mit anderen, aus dem Stand der Technik bekannten Verschließmechanismen 69 verwendet werden können. Diese können dabei mit Wasser, welches gegebenenfalls mit unterschiedlichen Zusätzen versetzt sein kann, gefüllt sein. Weiters können diese zum Aufbau eines Überdrucks im Behälter 70 teils mit einem komprimierten Gas gefüllt oder einer beliebigen Druckerzeugungsvorrichtung ausgestattet sein.

Zur Kupplungsvorrichtung 24 sei angemerkt, dass diese am Gehäuse 29 an einer Außenseite 74 einen Angriffsbereich 75 aufweisen kann, der beispielsweise eine Struktur bzw. Prägung 76 aufweist, so dass die Kupplungsvorrichtung 24 gut handhabbar bzw. montierbar ist. Selbstverständlich können zu diesem Zweck im Angriffsbereich 75 auch Vertiefungen bzw. Erhebungen, Aufrauungen, Gummielemente, Noppen usw. angeordnet sein.

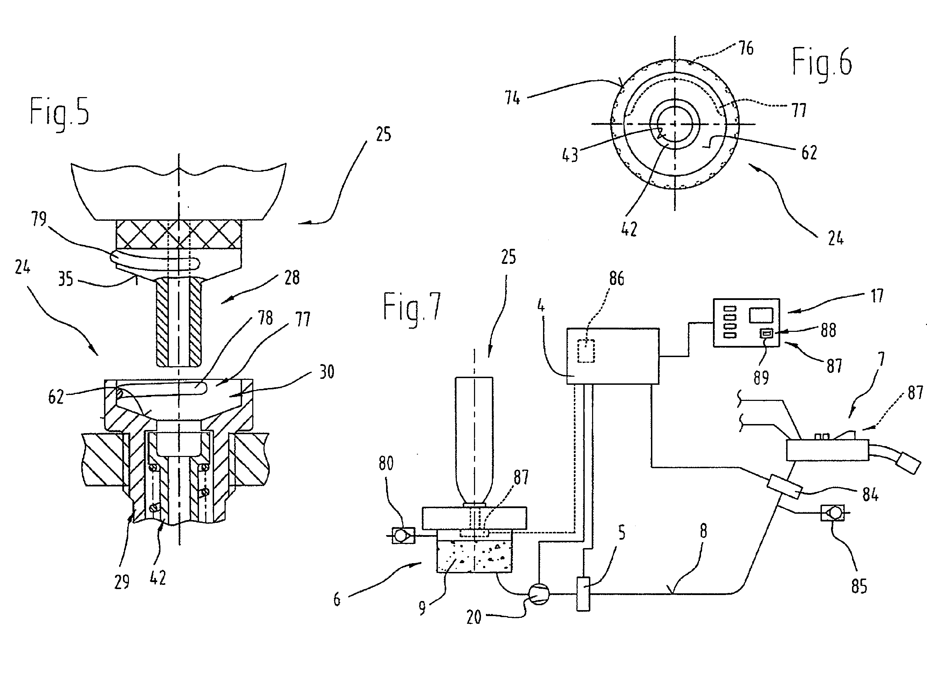

Es sei weiters angemerkt, dass zwischen dem Spender 28 und der Kupplungsvorrichtung 24 eine Verriegelung in der Befüllstellung möglich ist, so dass die Kartusche 25 selbsttätig geöffnet bleibt und sich entleeren kann. Ein Ausführungsbeispiel eines derartigen Verriegelungsmechanismus 77 ist in Fig. 5 gezeigt. Der Verriegelungsmechanismus 77 ist durch einen Gewindegang 78 im Aufnahmebereich 30 des Gehäuses 29 und einen Gewindegang 79 am Spender 28 gebildet. Durch ein zuvor beschriebenes Aufsetzen der Kartusche 25 auf die Kupplungsvorrichtung 24 und eine anschließende Verdrehung der Kartusche 25, so dass die Gewindegänge 78, 79 in Eingriff kommen, kann die Kartusche 25 an der Kupplungsvorrichtung 24 in geöffneter Stellung fixiert werden. Weiters ist es möglich, dass der Verriegelungsmechanismus 77 neben der Befestigung der Kartusche 25 gleichzeitig ein Öffnen der Kartusche 25 bewirkt, wobei dies nicht näher dargestellt ist.

In der Fig. 6 ist das Ausführungsbeispiel der Kupplungsvorrichtung 24 in Draufsicht gezeigt. Hier ist ersichtlich, dass das Gehäuse 29 und der Hohlbolzen 42 im Wesentlichen zylindrisch ausgebildet sind. Ein eventuell vorhandenes Element des Verriegelungsmechanismus 77 ist in strichlierten Linien dargestellt.

Aus der Fig. 2 und 7 ist weiters ersichtlich, dass dem Tank 6 bevorzugt eine Entlüftungsvorrichtung 80 zugeordnet ist. Die Entlüftungsvorrichtung 80 ist beispielsweise durch ein Überdruckventil 81 gebildet, so dass ein im Tank 6 herrschender Überdruck, der beim Befüllen des Tanks 6 mit der Flüssigkeit 9 entsteht, abgebaut werden kann. Die durch die Flüssigkeit 9 verdrängte Luft im Tank 6 entweicht dabei durch eine Öffnung 82 der Entlüftungsvorrichtung 80. Die Entlüftungsvorrichtung 80 ist vorzugsweise selbsttätig sperrend, in Fig. 2 symbolisiert durch ein Federelement 83, ausgebildet.

Weiters ist in Fig. 7 gezeigt, dass in der Versorgungsleitung 8 oder dem Schneidbrenner 7 ein Sperrglied 84 angeordnet sein kann, welches eine Flüssigkeitszufuhr zum Schneidbrenner 7 bei Bedarf unterbrechen kann. Ist das Sperrglied 84 aktiviert, kann eine über die Versorgungsleitung 8 zum Schneidbrenner 7 geförderte Flüssigkeit 9 nicht aus dem Schneidbrenner 7 abfließen. Somit können die Versorgungsleitung 8 und der Schneidbrenner 7 mit Flüssigkeit 9 versorgt bzw. beaufschlagt werden, wobei gegebenenfalls über die Fördervorrichtung 20 ein definierter Druck in der Versorgungsleitung 8 aufgebaut werden kann. Weiters kann dem Schneidbrenner 7 und/oder der Versorgungsleitung 8 eine Entlüftungsvorrichtung 85 zugeordnet sein, über die in der Versorgungsleitung 8 bzw. im Schneidbrenner 7 vorhandenes Gas, insbesondere Luft, das bei einem leeren Tank 6 gegebenenfalls von der Fördervorrichtung 20 angesaugt wurde, entweichen kann. Nach der Wiederbefüllung des Tanks 6 können somit Gaseinschlüsse in der Flüssigkeitszufuhr zum Schneidbrenner 7 vermieden werden, wodurch der Schneidprozess ordnungsgemäß gestartet werden kann.

Die Erfindung betrifft ein Wasserdampf-Schneidgerät 1, sowie ein Verfahren zum Steuern des Wasserdampf-Schneidgeräts 1.

In Fig. 7 ist eine Ausführungsvariante des Wasserdampf-Schneidgeräts 1 gezeigt. Die Steuervorrichtung 4 weist ein Speicherelement 86 auf, in dem Prozessparameter bzw. Prozessabläufe, bevorzugt in Form digitaler Daten, hinterlegt sind. Entsprechend den hinterlegten Definitionen zur Durchführung unterschiedlicher Prozessabläufe kann eine Steuerung der Komponenten des Wasserdampf-Schneidgeräts 1 erfolgen. Die Steuervorrichtung 4 kann zur Verarbeitung von digitalen Signalen bzw. Daten eine Mikroprozessorsteuerung aufweisen. Die von der Steuervorrichtung 4 angesteuerten Komponenten können dabei über Signalleitungen, beispielsweise einem Datenbus, mit dieser verbunden sein, wobei derartige, insbesondere digitale, Steuerungs- bzw. Regelungssysteme aus dem Stand der Technik bekannt sind und deshalb hier nicht näher dargestellt und beschrieben sind.

Im Speicherelement 86 ist neben einem Prozessablauf zur Durchführung eines Schneidprozesses, in dem der Schneidbrenner 7 einen Schneidstrahl zum Bearbeiten des Werkstücks 23 abgibt, auch ein Prozessablauf durch Durchführung eines so genannten Befüllmodus hinterlegt. Im Befüllmodus wird die Einsatzbereitschaft des Wasserdampf-Schneidgeräts 1 geprüft und/oder wiederhergestellt, nachdem eine Wartung des Wasserdampf-Schneidgeräts 1 durchgeführt wurde. Beispielsweise kann der Befüllmodus nach einer Erst- oder Wiederbefüllung des Tanks 6 mit Flüssigkeit 9 durchgeführt werden, um sicherzustellen das in der Versorgungsleitung 8 bzw. dem Schneidbrenner 7 genügend Flüssigkeit 9 zur ordnungsgemäßen Durchführung eines Schneidprozesses vorhanden ist. Im Befüllmodus wird also von der Steuervorrichtung 4 die Fördervorrichtung 20 für Flüssigkeit 9 angesteuert, so dass Flüssigkeit 9 in den Schneidbrenner 7 über die zu diesem führende Versorgungsleitung 8 gefördert wird.

Die Steuervorrichtung 4 ist mit einem Aktivierungselement 87 gekoppelt, welches bei Aktivierung bzw. Betätigung den Befüllmodus einleiten kann. Das Aktivierungselement 87 ist bevorzugt durch ein Bedienelement 88, insbesondere eine Taste 89, gebildet. Das Bedienelement 88 kann der Ein- und/oder Ausgabevorrichtung 17 am Versorgungsgerät 2 zugeordnet sein, oder als eigenes Element oder mit dem Bedienelement 18 kombiniert am Schneidbrenner 7 angeordnet sein. Zur Durchführung des Befüllmodus werden aus einem Speicherelement diesbezügliche Prozessparameter aufgerufen, nach denen die Fördereinrichtung 20 für Flüssigkeit 9, insbesondere die Pumpe 21, bzw. das Sperrelement 5 und/oder das Sperrglied 84 gesteuert werden. Im Befüllmodus wird bevorzugt keine elektrische Energie zur Erzeugung eines Lichtbogens an den Schneidbrenner 7 übertragen, wobei die Steuervorrichtung 4 die Stromquelle 3 dementsprechend ansteuert.

Gegebenenfalls weist das Wasserdampf-Schneidgerät 1 einen mit der Steuervorrichtung 4 gekoppelten Strömungs- oder Druckwächter auf, der die Flüssigkeitsverteilung im Schneidbrenner 7 und der Versorgungsleitung 8 erkennt. Beispielweise wird während des Befüllmodus vom Strömungs- oder Druckwächter kontrolliert, ob der Schneidbrenner 7 bzw. die Versorgungsleitung 8 mit Flüssigkeit 9 versorgt sind bzw. ob in der Leitung 7 ein definierter Mindestdruck vorherrscht. Bei ordnungsgemäßer Flüssigkeitsverteilung wird dies vom Strömungs- oder Druckwächter erkannt, worauf der Befüllmodus beendet wird.

Ist das Aktivierungselement 87 durch ein Bedienelement 88 gebildet, kann der Befüllmodus von einem Bedienpersonal manuell nach erfolgter Befüllung des Tanks 6 durch Betätigung des Bedienelements 88 eingeleitet werden.

Optional kann dem Tank 6 bzw. der Kupplungsvorrichtung 24 ein als Erfassungsmittel bzw. Sensor gebildetes Aktivierungselement 87 zugeordnet sein - in Fig. 7 in strichlierten Linien dargestellt, das der Steuervorrichtung 4 automatisch mitteilt, ob eine Befüllung des Tanks 6, d.h. eine Ankoppelung einer Kartusche 25 an die Kupplungsvorrichtung durchgeführt wurde. Somit kann sichergestellt werden, dass der Befüllmodus nur nach erfolgter Befüllung des Tanks 6 durchführbar ist, wobei der Befüllmodus gegebenenfalls automatisch durch die Steuervorrichtung 4 aufgerufen werden kann. Weiters kann die Steuervorrichtung 4 die Durchführung eines Schneidprozesses durch den Schneidbrenner 7 solange sperren, bis der Befüllmodus vollzogen wurde.

Es ist auch eine Ausführungsvariante möglich, bei der ein Bedienelement 88 und ein Erfassungsmittel vorgesehen sind, so dass eine manuelle Einleitung des Befüllmodus durch das Bedienelement 88 von den ermittelten Zuständen des Erfassungsmittels möglich ist. Weiters ist es möglich, bei jeder Betätigung des Bedienelements 88 oder bei jedem Schneidprozessstart den Befüllmodus durchzuführen, so dass die Einsatzbereitschaft des Schneidgeräts 1 als Sicherheitsmaßnahme überprüft werden kann.

## Patentansprüche

1. Wasserdampf-Schneidgerät (1) mit einer Steuervorrichtung (4) mit einem Speicherelement (86) für Prozessparameter und Prozessabläufe, welche mit einer Stromquelle (3) und einer Fördervorrichtung (20) für Flüssigkeit (9), insbesondere einer Pumpe (21) und gegebenenfalls einem Sperrelement (5) und/oder Sperrglied (84) des Wasserdampf-Schneidgeräts (1) verbunden ist, wobei das Wasserdampf-Schneidgerät (1) einen mit Flüssigkeit (9) befüllbaren Tank (6) und einen mit diesem über eine Versorgungsleitung (8) und mit der Stromquelle (3) verbundenen Schneidbrenner (7) aufweist, **dadurch gekennzeichnet, dass** im Speicherelement (86) Definitionen zur Durchführung eines Befüllmodus hinterlegt sind, und ein Aktivierungselement (87) mit der Steuervorrichtung (4) gekoppelt ist, wobei das Aktivierungselement (87) ausgebildet ist, um bei dessen manueller Betätigung oder bei automatischer Erkennung eines definierten Ereignisses einen derartigen Befüllmodus einzuleiten, mit dem die Einsatzbereitschaft des Wasserdampf-Schneidgeräts (1) geprüft und wiederhergestellt werden kann, wobei zur Wiederherstellung der Einsatzbereitschaft die Fördervorrichtung (20) ansteuerbar ist, sodass Flüssigkeit (9) über die Versorgungsleitung (8) in den Schneidbrenner (7) gefördert wird, wobei ein Sperrglied (84) in der Versorgungsleitung (8) zur Unterbrechung der Flüssigkeitszufuhr zum Schneidbrenner (7) aktivierbar ist, um die Durchführung eines Schneidprozesses bis zum Vollzug des Befüllmodus zu sperren.

2. Wasserdampf-Schneidgerät (1) nach Anspruch 1, **dadurch gekennzeichnet, dass** das Aktivierungselement (87) durch ein Bedienelement (88), insbesondere eine Taste (89), gebildet ist.

3. Wasserdampf-Schneidgerät (1) nach Anspruch 2, **dadurch gekennzeichnet, dass** das Bedienelement (88) durch eine Ein- und/oder Ausgabevorrichtung (17) des Wasserdampf-Schneidgeräts (1) gebildet ist.

4. Wasserdampf-Schneidgerät (1) nach Anspruch 2 oder 3, **dadurch gekennzeichnet, dass** das Bedienelement (88) am Schneidbrenner (7) angeordnet ist.

5. Wasserdampf-Schneidgerät (1) nach Anspruch 1, **dadurch gekennzeichnet, dass** das Aktivierungselement (87) durch ein Erfassungsmittel, insbesondere einen Sensor, gebildet ist, das zur Überwachung des Tanks (6) ausgebildet ist.

6. Wasserdampf-Schneidgerät (1)Steuervorrichtung nach Anspruch 1 oder 5, **dadurch gekennzeichnet, dass** das Erfassungsmittel mit einer Kupplungsvorrichtung (24), zur Überwachung derselben gekoppelt ist, wobei das Erfassungsmittel erkennt, ob eine Ankoppelung einer Kartusche (25) an den Tank (6) erfolgt.

7. Verfahren zum Steuern eines Wasserdampf-Schneidgeräts (1), bei dem eine Steuerung eines Betriebszustands des Wasserdampf-Schneidgeräts (1) mittels einer Steuervorrichtung (4) erfolgt, wobei hierzu Signale an eine Stromquelle (2), eine Fördereinrichtung (20) für Flüssigkeit und gegebenenfalls einem Sperrelement (5) und/oder einem Sperrglied (84) übertragen werden, so dass eine Flüssigkeit (9) von einem befüllbaren Tank (6) über eine Versorgungsleitung (8) zu einem Schneidbrenner (7) gefördert werden kann und dem Schneidbrenner (7) bedarfsweise elektrische Energie von der Stromquelle (3) zugeführt werden kann, **dadurch gekennzeichnet, dass** in Abhängigkeit eines Aktivierungselements (87) ein Befüllmodus von der Steuervorrichtung (4) aufgerufen wird, bei dem die Einsatzbereitschaft, insbesondere eine Flüssigkeitsverteilung in der Versorgungsleitung (8) und dem Schneidbrenner (7), des Wasserdampf-Schneidgeräts (1) geprüft und wiederhergestellt wird, wobei zur Wiederherstellung der Einsatzbereitschaft die Fördervorrichtung (20) angesteuert wird, sodass Flüssigkeit (9) über die Versorgungsleitung (8) in den Schneidbrenner (7) gefördert wird, wobei ein Sperrglied (84) in der Versorgungsleitung (8) zur Unterbrechung der Flüssigkeitszufuhr zum Schneidbrenner (7) aktiviert wird, um die Durchführung eines Schneidprozesses zu sperren, bis der Befüllmodus vollzogen wurde.

8. Verfahren nach Anspruch 7, **dadurch gekennzeichnet, dass** das Aktivierungselement (87) nach einer erfolgten Erst- oder Wiederbefüllung des Tanks (6) über eine Kupplungsvorrichtung (24), betätigt bzw. aktiviert wird, bevor über den Schneidbrenner (7) ein Schneidprozess durchgeführt wird.

9. Verfahren nach Anspruch 7 oder 8, **dadurch gekennzeichnet, dass** als Aktivierungselement (87) ein manuell betätigbares Bedienelement (88), insbesondere eine Taste (89), verwendet wird.

10. Verfahren nach einem der Ansprüche 7 bis 9, **dadurch gekennzeichnet, dass** zur Durchführung des Befüllmodus aus einem Speicherelement (86) diesbezügliche Parameter aufgerufen werden, nach denen die Fördereinrichtung (20) für Flüssigkeit, insbesondere eine Pumpe (21), das Sperrelement (5) der Versorgungseinrichtung (2) und/oder das Sperrglied (84) im Bereich des Schneidbrenners (7), gesteuert werden.

11. Verfahren nach einem der Ansprüche 7 bis 10, **dadurch gekennzeichnet, dass** beim Befüllmodus von einem Strömungs- oder Druckwächter kontrolliert wird, ob der Schneidbrenner (7) bzw. die Versorgungsleitung (8) mit Flüssigkeit (9), gegebenenfalls unter Anliegen eines Mindestdrucks in der Versorgungsleitung (8), versorgt wird.

12. Verfahren nach einem der Ansrpüche 7 bis 11, **dadurch gekennzeichnet, dass** beim Befüllmodus eine Entlüftung der Versorgungsleitung (8) bzw. des Schneidbrenners (7), insbesondere über eine Entlüftungsvorrichtung (85), erfolgt.

## Claims

1. A water vapor cutting device (1) comprising a control device (4) having a storage element (86) for process parameters and process procedures, connected to a current source (3) and a feeding device (20) for liquid (9), particularly a pump (21) and optionally a locking element (5) and/or a locking member (84) of the water vapor cutting device (1), wherein said water vapor cutting device (1) has a tank (6) that may be filled with liquid (9) and a cutting torch (7) connected to said tank (6) via a feed line (8) as well as connected to said current source (3), **characterised in that** definitions for carrying out a filling mode are stored in said storage element (86), and an activating element (87) is coupled with said control device (4), said activating device (87) being designed such that such filling mode is initialized when said activating element is actuated by hand or when a defined incident is detected automatically, allowing checking and restoration of operability of said water vapor cutting device (1), wherein for restoring the operability, the feeding device (20) can be controlled so that liquid (9) is supplied into the cutting torch (7) via the feed line (8), wherein a locking member (84) in said feed line (8) can be activated for interrupting the liquid supply to the cutting torch (7) so as to block carrying out a cutting process until said filling mode has been carried out.

2. A water vapor cutting device (1) according to claim 1, **characterised in that** said activating element (87) is formed by an operating element (88), particularly a key (89).

3. A water vapor cutting device (1) according to claim 2, **characterised in that** said operating element (88) is formed by an input and/or output device (17) of said water vapor cutting device (1).

4. A water vapor cutting device (1) according to claim 2 or 3, **characterised in that** said operating element (88) is arranged on said cutting torch (7).

5. A water vapor cutting device (1) according to claim 1, **characterised in that** said activating element (87) is formed by a detecting means, particularly a sensor, provided to monitor said tank (6).

6. A water vapor cutting device (1) control device according to claim 1 or 5, **characterised in that** said detecting means is coupled with a coupling device (24) for monitoring said coupling device, with said detecting means detecting whether a cartridge (25) is being coupled to said tank (6).

7. A method for controlling a water vapor cutting device (1), wherein the mode of operation of said water vapor cutting device (1) is controlled by means of a controlling device (4) by transmitting signals to a current source (2), a feeding device (20) for liquids and optionally a locking element (5) and/or a locking member (84), so that a liquid (9) may be supplied from a fillable tank (6) to a cutting torch (7) via a feed line (8) and said cutting torch (7) may be provided with electric power from said current source (3) if necessary, **characterised in that**, depending on an activating element (87), a filling mode is recalled by said control device (4), during which operability of said water vapor cutting device (1), particularly a distribution of liquid in said feed line (8) and in said cutting torch (7), is checked and restored, and to restore operability, the feeding device (20) is controlled so that liquid (9) is supplied into the cutting torch (7) via the feed line (8), a locking member (84) in said feed line (8) being activated for interrupting the liquid supply to the cutting torch (7) so as to block carrying out a cutting process until said filling mode has been carried out.

8. A method according to claim 7, **characterised in that** before a cutting process is carried out by said cutting torch (7), said activating element (87) is actuated or activated via a coupling device (24) after said tank (6) has been filled for the first time or re-filled.

9. A method according to claim 7 or 8, **characterised in that** an operating element (88) actuatable by hand, particularly a key (89), is used as said activating element (87).

10. A method according to any one of claims 7 to 9, **characterised in that** for carrying out the filling mode, the relevant parameters are recalled from a storage element (86), and said feeding device (20) for liquids, particularly a pump (21), said locking element (5) of said supply device (2) and/or said locking member (84) in the area of said cutting torch (7) are controlled accordingly.

11. A method according to any one of claims 7 to 10, **characterised in that** during the filling mode a flow control device or a pressure control device check whether or not said cutting torch (7) and said feed line (8) are supplied with liquid (9), optionally by applying a minimum pressure to said feed line (8).

12. A method according to any one of claims 7 to 11, **characterised in that** during said filling mode said feed line (8) and said cutting torch (7) are de-gassed, particularly via a degassing means (85).

## Revendications

1. Appareil de coupe à vapeur d'eau (1) doté d'un dispositif de commande (4) avec un élément de stockage (86) pour des paramètres de processus et des déroulements de processus, qui est relié à une source de courant (3) et un dispositif de transport (20) pour du liquide (9), en particulier une pompe (21) et éventuellement un élément de blocage (5) et/ou un organe de blocage (84) de l'appareil de coupe à vapeur d'eau (1), lequel appareil de coupe à vapeur d'eau (1) présente un réservoir (6) pouvant être rempli de liquide (9) et un chalumeau (7) relié à ce réservoir par une conduite d'alimentation (8) et à la source de courant (3), **caractérisé en ce que** des définitions sont déposées dans l'élément de stockage (86) pour l'exécution d'un mode de remplissage, et un élément d'activation (87) est couplé avec le dispositif de commande (4), dans lequel l'élément d'activation (87) est conçu pour mettre en oeuvre, lors de son actionnement manuel ou en cas de reconnaissance automatique d'un événement défini, un tel mode de remplissage avec lequel la disponibilité opérationnelle de l'appareil de coupe à vapeur d'eau (1) peut être testée et rétablie, dans lequel le dispositif de transport (20) peut être actionné pour rétablir la disponibilité opérationnelle, de sorte que du liquide (9) soit transporté via la conduite d'alimentation (8) jusque dans le chalumeau (7), dans lequel un organe de blocage (84) peut être activé dans la conduite d'alimentation (8) pour l'interruption de l'arrivée de liquide au chalumeau (7), afin de bloquer l'exécution d'un processus de coupe jusqu'à la réalisation du mode de remplissage.

2. Appareil de coupe à vapeur d'eau (1) selon la revendication 1, **caractérisé en ce que** l'élément d'activation (87) est formé par un élément de manipulation (88), en particulier une touche (89).

3. Appareil de coupe à vapeur d'eau (1) selon la revendication 2, **caractérisé en ce que** l'élément de manipulation (88) est formé par un dispositif d'entrée et/ou de sortie (17) de l'appareil de coupe à vapeur d'eau (1).

4. Appareil de coupe à vapeur d'eau (1) selon la revendication 2 ou 3, **caractérisé en ce que** l'élément de manipulation (88) est agencé sur le chalumeau (7).

5. Appareil de coupe à vapeur d'eau (1) selon la revendication 1, **caractérisé en ce que** l'élément d'activation (87) est formé d'un moyen d'enregistrement, en particulier un capteur, qui est conçu pour le contrôle du réservoir (6).

6. Dispositif de commande d'appareil de coupe à vapeur d'eau (1) selon la revendication 1 ou 5, **caractérisé en ce que** le moyen d'enregistrement est couplé à un dispositif d'accouplement (24), pour le contrôle de celui-ci, où le moyen d'enregistrement détecte si un couplage d'une cartouche (25) sur le réservoir (6) a eu lieu.

7. Procédé pour commander un appareil de coupe à vapeur d'eau (1) dans lequel une commande d'un état de service de l'appareil de coupe à vapeur d'eau (1) s'effectue au moyen d'un dispositif de commande (4), dans lequel des signaux sont transmis à cet effet à une source de courant (2), un appareil de transport (20) pour du liquide et éventuellement un élément de blocage (5) et /ou un organe de blocage (84), de sorte qu'un liquide (9) peut être transporté depuis un réservoir (6) pouvant être rempli via une conduite d'alimentation (8) jusqu'à un chalumeau (7) et si nécessaire, de l'énergie électrique peut être amenée de la source de courant (3) au chalumeau (7), **caractérisé en ce que**, en fonction d'un élément d'activation (87), un mode de remplissage est appelé par le dispositif de commande (4), dans lequel la disponibilité opérationnelle, en particulier une répartition de liquide dans la conduite d'alimentation (8) et le chalumeau (7), de l'appareil de coupe à vapeur d'eau (1) est testée et rétablie, dans lequel le dispositif de transport (20) est actionné pour le rétablissement de la disponibilité opérationnelle, de sorte que du liquide (9) est transporté via la conduite d'alimentation (8) jusque dans le chalumeau (7), dans lequel un organe de blocage (84) est activé dans la conduite d'alimentation (8) pour l'interruption de l'arrivée de liquide au chalumeau (7), afin de bloquer l'exécution d'un processus de coupe jusqu'à ce que le mode de remplissage ait été réalisé.

8. Procédé selon la revendication 7, **caractérisé en ce que** l'élément d'activation (87) est actionné ou activé après qu'un premier remplissage ou re-remplissage du réservoir (6) a été effectué via un dispositif d'accouplement (24), avant qu'un processus de coupe ne soit exécuté sur le chalumeau (7).

9. Procédé selon la revendication 7 ou 8, **caractérisé en ce qu'**un élément de manipulation (88) actionnable manuellement, en particulier une touche (89), est utilisé comme élément d'activation (87).

10. Procédé selon l'une des revendications 7 à 9, **caractérisé en ce que**, pour exécuter le mode de remplissage, on appelle à partir d'un élément de stockage (86) les paramètres concernés selon lesquels le dispositif de transport (20) pour du liquide, en particulier une pompe (21), l'élément de blocage (5) du dispositif d'alimentation (2) et/ou l'organe de blocage (84) sont commandés dans la zone du chalumeau (7).

11. Procédé selon l'une des revendications 7 à 10, **caractérisé en ce que**, lors du mode de remplissage, on vérifie par un contrôleur d'écoulement ou de pression si le chalumeau (7) ou la conduite d'alimentation (8) est alimentée avec du liquide (9), éventuellement en appliquant une pression minimale dans la conduite d'alimentation (8).

12. Procédé selon l'une des revendications 7 à 11, **caractérisé en ce que**, lors du mode de remplissage, a lieu une aération de la conduite d'alimentation (8) ou du chalumeau (7), en particulier via un dispositif d'aération (85).
